Europäisches Patentamt

European Patent Office

Office européen des brevets

(11) Veröffentlichungsnummer: **0 402 653**
**A2**

## (12) EUROPÄISCHE PATENTANMELDUNG

(21) Anmeldenummer: **90109387.2**

(22) Anmeldetag: **17.05.90**

(51) Int. Cl.5: **H01B 17/30, H02G 15/013**

(30) Priorität: **13.06.89 DE 3919344**

(43) Veröffentlichungstag der Anmeldung:
**19.12.90 Patentblatt 90/51**

(84) Benannte Vertragsstaaten:
**AT BE CH DE ES FR GB IT LI NL SE**

(71) Anmelder: **Siemens Aktiengesellschaft**
**Wittelsbacherplatz 2**
**D-8000 München 2(DE)**

(72) Erfinder: **Bachel, Ernst**
**Erlenweg 8**
**D-8085 Geltendorf(DE)**

(54) **Kabeleinführungsdichtung.**

(57) Die Erfindung betrifft eine Kabeleinführungsdichtung aus verformbarem Material in Form eines ringförmigen Stopfens (9) aus einem geschäumten Elastomer, der in eine Kabeleinführungsöffnung in Form einer Hülse (8) eines Gehäuses (4) eingesetzt wird.

FIG 3

EP 0 402 653 A2

## Kabeleinführungsdichtung.

Die Erfindung betrifft eine Kabeleinführungsdichtung aus verformbarem Material.

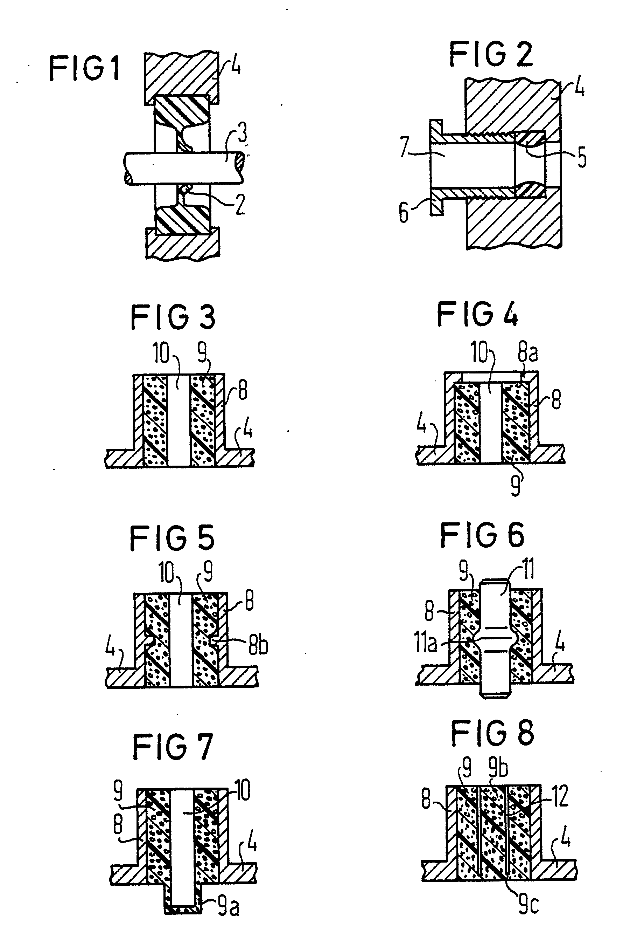

Bekannt sind Kabeleinführungsdichtungen aus verformbarem Material in Form von Lippendichtungen, wie sie zum Beispiel in Figur 1 dargestellt sind. Dort wird das einzuführende Kabel 3 durch ein relativ kleines Loch einer elastischen Folie 2 hindurchgesteckt. Mit einer derartigen Foliendichtung kann jedoch nur eine Staubdichtigkeit erreicht werden. Weiterhin sind Kabeleinführungsdichtungen nach dem Stopfbuchsenprinzip bekannt, wie sie in Figur 2 angedeutet werden. Dort wird ein ringförmig eingelegtes verformbares Material 5 innerhalb einer als Büchse ausgeführten Einführungsöffnung mittels einer Hohlschraube 6 so verformt, daß der Raum zwischen dem eingeführten Kabel und der Hülse 4 ausgefüllt wird. Bei diesen Ausführungen kann jedoch nur ein sehr geringer Durchmesserbereich erfaßt werden. Andernfalls müssen entsprechende Erweiterungen der Öffnungen oder Durchmesseranpassungen der Hohlschrauben vorgenommen werden. Dies erfordert mehr Aufwand und Sachverstand bei der Anpassung der Öffnungsdurchmesser. Außerdem sind Verschlüsse bei Nichtbelegung der Einführungsöffnungen nur mit angepaßten Zusätzen möglich.

Für vorliegende Erfindung stellt sich nun die Aufgabe, eine Kabeleinführungsdichtung zu schaffen, mit der in einfacher Weise ein relativ großer Kabeldurchmesserbereich erfaßt werden kann, wobei zusätzlich eine einfache Möglichkeit zum Abschließen der Kabeleinführungsöffnungen geboten werden soll. Die gestellte Aufgabe wird mit Hilfe einer Kabeleinführungsdichtung aus verformbarem Material dadurch gelöst, daß ein Stopfen aus einem geschäumten Elastomer in einer Einführungsöffnung eines Muffengehäuses angeordnet ist, daß die Kabeleinführungsöffnung des Stopfens einen kleineren Durchmesser aufweist als das einzuführende Kabel.

Die Vorteile an den Kabeleinführungsdichtungen gemäß der Erfindung liegen darin, daß aufgrund der Eigenschaften des geschäumten Stopfenmaterials aus einem Elastomer, vorzugsweise Silikonkautschuk, zulassen, daß ein großer Durchmesserbereich für die Einführung von Kabeln umfaßt wird und daß die Montage völlig problemlos und einfach durchzuführen ist und daß weiterhin für den Abschluß der Kabeleinführungsöffnungen bei Nichtbelegung ebenfalls unproblematische Möglichkeiten gegeben sind.

Die Erfindung wird anhand von acht Figuren näher erläutert.

Figur 1 zeigt den in der Einleitung beschriebenen ersten Stand der Technik.

Figur 2 zeigt den in der Einleitung beschriebenen zweite der Technik.

Figur 3 zeigt das einfachste Ausführungsbeispiel gemäß der Erfindung.

Figur 4 zeigt ein Ausführungsbeispiel mit einer ersten Sicherung gegen Herausrutschen aus der Einführungsöffnung.

Figur 5 zeigt ein zweites Ausführungsbeispiel mit einer weiteren Sicherung gegen Herausrutschen aus der Einführungsöffnung.

Figur 6 zeigt eine erste Abschlußmöglichkeit mit Hilfe eines separaten Stopfens.

Figur 7 zeigt eine zweite Abschlußmöglichkeit mit Hilfe einer abtrennbaren Abschlußwandung.

Figur 8 zeigt eine dritte Abschlußmöglichkeit, bei der die Einführungsöffnung im Stopfen nicht völlig ausgestanzt ist.

Die Figuren 1 und 2 sind bereits in der Einleitung gewürdigt.

Die Figur 3 zeigt das einfachste Ausführungsbeispiel für eine Kabeleinführungsdichtung gemäß der Erfindung, die als zylindrischer Stopfen 9 mit einer Einführungsöffnung 10 ausgebildet ist. Dieser Stopfen 9 besteht aus einem Elastomer, vorzugsweise aus Silikonkautschuk, und ist eng passend in einer Art Hülse 8 eines Muffenkörpers 4 eingedrückt. Aufgrund der Eigenschaften des Elastomers läßt sich nun ein Kabel mit einem Durchmesser der größer ist als die freie Durchführungsöffnung einführen und ausreichend abdichten. Mit dem verwendeten Material läßt sich ein genügend großer Durchmesserbereich aufgrund der Elastizität überbrücken. (Verhältnis kleinster/größter Kabeldurchmesser bei etwa 1:2)

In Figur 4 wird verdeutlicht, daß der Stopfen 9 gegen Herausrutschen aus der Hülse 8 durch einen einwärts gerichteten Kragen 8a gesichert ist. Dies ist besonders vorteilhaft beim Einführen des Kabels in die Einführungsöffnung 10, da dadurch der Stopfen 9 in seiner Lage in axialer Richtung fixiert ist.

Sei der Ausführungsform nach Figur 5 ist eine andere Form zur Fixierung des Stopfens 9 gewählt. Hier ist innerhalb der als Hülse 8 ausgebildeten Einführungsöffnung ein umlaufender Bund 8b vorgesehen. In den Figurn 6, 7 und 8 sind Ausführungsbeispiele für Kabeleinführungsdichtungen nach der Erfindung gezeigt, bei denen ein Abschluß der Einführungsöffnung vorgesehen ist, der nur bei Bedarf entfernt wird.

Die Figur 6 zeigt einen einfachen Abschluß, der mit Hilfe eines zylindrischen Verschlußteils 11 hergestellt wird. Dies hat den Vorteil, daß der Abschluß je nach Bedarf immer wieder auch entfernt bzw. eingesetzt werden kann. Zusätzlich ist eine Rutschhemmung vorgesehen, die hier in Form einer umlaufenden Ausformung 11a ausgeführt ist.

Die Figur 7 zeigt einen Abschluß in Form einer Abschlußwandung 9a, die am zugänglichen Ende des Stopfens 9 fest angeordnet, das heißt vorzugsweise angeformt ist. Durch Abtrennen dieser Abschlußwandung 9a kann schließlich der Zugang zur Einführungsöffnung 10 des Stopfens 9 geschaffen werden.

Bei dem Ausführungsbeispiel nach Figur 8 ist eine weitere Variante für einen Abschluß der Einführungsöffnung gewählt, der jedoch nur einmalig angewendet werden kann. Hier wird in einem Stopfen 9 aus Vollmaterial eine zylindrische Stanzung 12 zentrisch eingebracht, wobei die Stanzung 12 zunächst nicht völlig bis zur Austrennung erfolgt, so daß in diesem Zustand durch den verbleibenden Kern 9b und der restlichen Abschlußwandung 9c noch ein Abschluß besteht. Erst bei Bedarf wird schließlich der zentrische Kern 9b herausgetrennt und die Einführungsöffnung dadurch freigemacht.

Bezüglich der Formgestaltung des Stopfens insgesamt oder auch in Teilbereichen, wie zum Beispiel auf den äußeren oder inneren Flächen sind beliebige Variationen möglich, die jedoch am Prinzip der erfindungsgemäßen Kabeleinführungsdichtung selbst nichts verändern. So sind beispielsweise umlaufende Profilierungen oder ähnliche Details denkbar, mit denen zusätzliche Erleichterungen für das Einführen oder Verbesserungen für die Abdichtung je nach Einsatzfall erreichbar sind.

## Ansprüche

1. Kabeleinführungsdichtung aus verformbarem Material, **dadurch gekennzeichnet,** daß ein Stopfen (9) aus einem geschäumten Elastomer in einer Einführungsöffnung eines Muffengehäuses (4) angeordnet ist und daß die Kabeleinführungsöffnung (10) des Stopfens (9) einen kleineren Durchmesser aufweist als das einzuführende Kabel.

2. Kabeleinführungsdichtung nach Anspruch 1, **dadurch gekennzeichnet,** daß als Elastomer ein Silikonkautschuk verwendet ist.

3. Kabeleinführungsdichtung nach einem der vorhergehenden Ansprüche, **dadurch gekennzeichnet,** daß die Einführungsöffnung als Hülse (8) ausgebildet ist.

4. Kabeleinführungsdichtung nach Anspruch 3, **dadurch gekennzeichnet,** daß die Hülse (8) an eine einen nach einwärts gerichteten Kragen (8a) aufweist.

5. Kabeleinführungsdichtung nach Anspruch 3, **dadurch gekennzeichnet,** daß innerhalb der Einführungsöffnung in der Hülse (8) ein umlaufender Bund (8b) angeordnet ist.

6. Kabeleinführungsdichtung nach einem der vorhergehenden Ansprüche, **dadurch gekenn-**

**zeichnet,** daß innerhalb der Einführungsöffnung (10) des Stopfens (9) ein Verschlußteil (11) eingesetzt ist.

7. Kabeleinführungsdichtung nach Anspruch 6, **dadurch gekennzeichnet,** daß das Verschlußteil (11) eine Rutschhemmung, vorzugsweise eine umlaufende Ausformung (11a), aufweist.

8. Kabeleinführungsdichtung nach einem der Ansprüche 1 bis 6, **dadurch gekennzeichnet,** daß die Ein führungsöffnung (10) des Stopfens (9) an einem Ende eine abtrennbare Abschlußwandung (9a) aufweist.

9. Kabeleinführungsdichtung nach einem der Ansprüche 1 bis 6, **dadurch gekennzeichnet,** daß der Stopfen (9) als Einführungsöffnung (10) eine zylindrische, nicht völlig durchgehende Stanzung (12) aufweist, so daß als Abschluß ein innerer Kern (9b) mit einer Abschlußwandung (9c) verbleibt, die austrennbar ist.

FIG1

FIG 2

FIG 3

FIG 4

FIG 5

FIG 6

FIG 7

FIG 8